# EUROPEAN PATENT SPECIFICATION

(11) **EP 3 701 355 B1**
(45) Date of publication and mention of the grant of the patent: **09.12.2026**
(21) Application number: 18789771.5
(22) Date of filing: 18.10.2018
(51) Int. Cl.: G06F 3/01, G02B 27/01

(54) **SELF-EXPANDING AUGMENTED REALITY-BASED SERVICE INSTRUCTIONS LIBRARY**
SELBSTEXPANDIERENDE DIENSTBEFEHLSBIBLIOTHEK DER ERWEITERTEN REALITÄT
BIBLIOTHÈQUE D'INSTRUCTIONS DE SERVICE BASÉE SUR LA RÉALITÉ AUGMENTÉE À AUTO-EXPANSION

(30) Priority: 23.10.2017 US 201762575553 P
(43) Date of publication of application: 02.09.2020
(73) Proprietor: Koninklijke Philips N.V., 5656 AE Eindhoven (NL)
(72) Inventor: PREVRHAL, Sven, Peter, 5656 AE Eindhoven (NL); SABCZYNSKI, Jörg, 5656 AE Eindhoven (NL)
(74) Representative: Philips Intellectual Property & Standards
(86) International application number: PCT/EP2018/078635
(87) International publication number: WO 2019/081350

(56) References cited:
- WO-A2-2008/036050
- US-A1- 2006 241 792
- US-A1- 2010 257 252
- US-A1- 2012 116 728
- PIRE TAIHU ET AL: "Stereo parallel tracking and mapping for robot localization", 2015 IEEE/RSJ INTERNATIONAL CONFERENCE ON INTELLIGENT ROBOTS AND SYSTEMS (IROS), IEEE, 28 September 2015 (2015-09-28), pages 1373 - 1378, XP032831767, DOI: 10.1109/IROS.2015.7353546

## Description

### FIELD

The following relates generally to the field servicing arts and more particularly to the medical imaging device and system servicing arts, to the augmented vision arts, and to related arts.

### BACKGROUND

Medical imaging devices include very complex systems such as magnetic resonance imaging (MRI) devices, transmission computed tomography (CT) imaging devices, emission imaging systems such as positron emission tomography (PET) imaging devices and gamma cameras for single photon emission computed tomography (SPECT) imaging, hybrid systems that provide multiple modalities in a single device, e.g. a PET/CT or SPECT/CT imaging device, and imaging devices designed for guiding biopsies or other interventional medical procedures, commonly referred to as image guided therapy (iGT) devices. These are merely illustrative examples.

US2006/241792A1 describes a method to generate technical information about a device or process by recognizing the identity of a device or process, retrieving a stored image dependent on the device, combining the stored virtual image together with an image of a real device object displaying the combination on a display and providing a virtual control HMI means to the user for monitoring and/or controlling the device or process. A graphical user interface, computer program and a system are also described.

US2010/257252A1 describes techniques for capturing and analyzing information gathered by a mobile device equipped with one or more sensors. Recognition and tracking software and localization techniques may be used to extrapolate pertinent information about the surrounding environment and transmit the information to a service that can analyze the transmitted information. In one embodiment, when a user views a particular object or landmark on a device with image capture capability, the device may be provided with information through a wireless connection via a database that may provide the user with rich metadata regarding the objects in view. Information may be presented through rendering means such as a web browser, rendered as a 2D overlay on top of the live image, and rendered in augmented reality.

US2012/116728A1 describes that a method, system, apparatus, and computer program product provide the ability to augment an as-built model. A CAD drawing of a project as well as a digital representation of a physical implementation of the project are obtained. A relationship that maps the digital representation to the CAD drawing is defined/established. A component of the digital representation is identified based on the relationship (e.g., and a database/catalog). Information about the identified component is transmitted to and displayed on a computer (e.g., a mobile device).

Modem medical imaging devices and systems present unusual challenges from a maintenance standpoint. They typically include a large number of sub-systems for widely varying purposes, including for example: mechanical and electromechanical systems for loading a patient, transport into the imaging examination area, and subsequent unloading; an x-ray tube assembly and x-ray detector array in the case of a CT imaging device; a rotating gantry assembly again in the case of CT; annular rings of radiation detector modules in the case of a PET imaging device; radiation detector heads and associated robotic hardware for maneuvering the heads around a patient in the case of a gamma camera; a superconducting magnet and associated liquid helium tank and/or other cryostat hardware in the case of MRI; user interfacing components such as computerized controllers, control buttons, switches, touch-sensitive displays, and the like; and so forth. Servicing of medical imaging devices usually must be performed in the field, that is, at the hospital or other medical facility at which the medical imaging device is deployed. Moreover, it is highly desirable to minimize servicing downtime since hospitals and other medical facilities expect these devices to be available nearly continuously to provide imaging or image-guided therapy to patients.

Yet a further difficulty from a servicing standpoint is that medical imaging devices are usually under near-constant development by the manufacturer, and are marketed with various optional components and component packages, so that different deployed installations of the same make/model of medical imaging device may nonetheless have different components depending upon when they were manufactured and depending upon which options the customer chose to purchase.

These considerations make it particularly challenging for service personnel to be fully knowledgeable about every potential maintenance task that may be encountered in the field. Service personnel may consult written service manuals and/or computer aided design (CAD) drawings; however, these may become dated over time, or may fail to include certain optional components. In the case of CAD drawings, service personnel may have difficulty ascertaining the correct drawings (component, version, et cetera) that should be referenced. Furthermore, if the service manual is not written by field service personnel, the manual may fail to address aspects that only become apparent when performing field servicing: for example, a particular component may be difficult to access in the field but this difficulty may not be appreciated by a design engineer drafting the service manual.

Another resource for service personnel in the field may be telephonic or video conferencing access to an expert specializing in the particular component, device, or the like undergoing service. This occupies valuable time of the expert, and requires coordination between the field service person and the expert - either the expert must be "on call" during servicing hours, or a day/time for the call must be scheduled ahead of time. Furthermore, the expert may have limited information on which basis to provide assistance. This information typically includes verbal description of the component and its environment provided by the service person, and perhaps video of the component provided using the built-in camera of a cellular telephone (cellphone) or other mobile device. Important information can be lost in transferring situational data from the service person to the expert and/or in conveying the expert's advice to the service person.

The following discloses a new and improved systems and methods.

### SUMMARY

The invention, and its scope of protection, is defined in the appended claims.

In an aspect, there is provided an augmented reality (AR) based servicing guidance device as defined in appended claim 1.

In another aspect, there is provided an AR based servicing guidance method as defined in appended claim 6.

In one disclosed example, an augmented reality (AR) based servicing guidance device comprises: a mobile device including a display and a camera; and an electronic processor programmed to perform computer vision (CV) processing to align AR content with a live video feed captured by the camera of the mobile device and to display on the display of the mobile device the AR content aligned with the live video feed.

In another disclosed example, an AR based servicing guidance method comprises: using a computer, authoring AR content including the operations of receiving user input at the computer identifying at least one location of interest (LOI) in recorded video of a service call and performing CV processing to align AR content with the recorded video of the service call including aligning a portion of the AR content with the at least one LOI; and using an electronic processor and a mobile device including a display and a camera, presenting the authored AR content including performing CV processing using the electronic processor to align the authored AR content with a live video feed produced by the camera of the mobile device and displaying on the display of the mobile device the authored AR content aligned with the live video feed.

In another disclosed example, an AR content authoring device is disclosed for authoring AR content for servicing guidance. The device includes a computer, and a non-transitory storage medium storing instructions readable and executable by the computer to perform an AR content authoring method including: receiving user input at the computer identifying at least one LOI in recorded video of a service call; and performing CV processing to align AR content with the recorded video of the service call including aligning a portion of the AR content with the at least one LOI.

One advantage resides in providing real-time automated assistance for service personnel.

Another advantage resides in providing real-time augmented reality (AR) content to assist in a service call.

Another advantage resides in providing real-time AR content to assist in a service call which is presented from the point-of-view of the service person and is tightly integrated with the service operations to be performed.

Another advantage resides in providing real-time AR content to assist in a service call in combination with the ability to switch to a preview mode incorporating the AR content.

Another advantage resides in providing real-time AR content leveraging a real-time video feed to automatically determine the appropriate AR content.

Another advantage resides in leveraging existing service calls to provide data for authoring AR-based service instructions.

A given embodiment may provide none, one, two, more, or all of the foregoing advantages, and/or may provide other advantages as will become apparent to one of ordinary skill in the art upon reading and understanding the present disclosure.

### BRIEF DESCRIPTION OF THE DRAWINGS

The invention may take form in various components and arrangements of components, and in various steps and arrangements of steps. The drawings are only for purposes of illustrating the preferred embodiments and are not to be construed as limiting the invention.
FIGURE 1 diagrammatically illustrates embodiments for leveraging a service call to perform maintenance on a medical imaging device in order to provide data for authoring augmented reality (AR)-based service instructions, along with a diagrammatic representation of an AR content authoring device using that data.
FIGURE 2 diagrammatically illustrates a more detailed embodiment of the AR content authoring device of FIGURE 1.
FIGURE 3 diagrammatically illustrates an AR-based service instructions delivery device for delivering AR content authored by the AR content authoring device of FIGURES 1 and 2.

### DETAILED DESCRIPTION

In improvements disclosed herein, a video recording (optionally including audio) of a service call for performing maintenance on a medical imaging device is leveraged to provide the basis for authoring augmented reality (AR) content for an AR-based service manual. The service call may be recorded using a regular camera, or to provide depth information a stereo camera may be used, and/or a range camera. If a single (non-range) camera is used then depth information may be extracted from different vantage points as the technician moves around. The camera may be head-mounted so as to provide the "first person" view of the service person. During the service call, a pointer may optionally be used to mark locations of interest (LOIs), and/or may provide running verbal commentary for recordation.

An authoring system is used to convert the recorded video of the service call to AR content for supporting future service calls directed to the same or similar maintenance task. The authoring system may use computer vision (CV) technology such as a Simultaneous Location and Mapping (SLAM) algorithm to simultaneously map the location of the service person and the salient environment (e.g. the serviced component and perhaps neighboring components). The extracted map can be used to align the component in the recorded video with computer-aided design (CAD) drawings of the component, and to spatially position the LOIs in three-dimensional space. A human editor then may add verbal explanation overlay (or this may be done using text-to-speech transcription of a written service manual). The human editor may also add overlays showing LOI markers as appropriate, and optionally may add other AR content assistive for the service technician such as part numbers, pop-up windows showing CAD drawing, CAD animations, or other visuals, colorized highlighting of key parts, and/or so forth. To facilitate use in the field, various stop points may be added to the AR content, and/or the AR content may be segmented into episodes that can be played back in different order (i.e. non-linear playback) to allow for handling of service calls in which steps may be performed in different order.

To use the authored AR-based service manual content, the service technician wears a heads-up display (HUD) having a transparent display (i.e. see-through display) which presents the AR overlay on a transparent screen of the HUD so as to be superimposed on the service person's actual view of the component under service. The HUD further includes a camera that captures the technician's view, and applies a SLAM algorithm to align the AR content with this real-time video feed so as to match the AR content overlay (and audio playback, if provided) with the real-time view of the service person.

Optionally, the service person can select a preview mode in which the pre-recorded video of the service call used to author the AR content is displayed, with the superimposed AR content. In this way, the service person can see a preview of how a step of the maintenance task is performed. Advantageously the AR processing is unchanged in this preview mode, except for: (i) performing the SLAM processing to align the AR content with the preview video rather than the live video feed, and (ii) displaying the prerecorded video content on the transparent display as an underlay.

In a further contemplated variant, the live video feed may be processed to identify a particular component or sub-component so as to automatically retrieve and present the appropriate AR content.

In the illustrative embodiments, the HUD employs a see-through display, which advantageously is transparent except for the AR content overlay so as to enable the service person to directly observe the component in real time. In a variant embodiment, the HUD employs an opaque display on which the live video feed is displayed as an underlay of the AR content (known as video augmented reality) - in this variant the service person indirectly "sees" the component being serviced by virtue of viewing the real-time video feed display.

As another contemplated variant, instead of a HUD, the AR content could be displayed on the display screen of a cellphone or other mobile device, leveraging the built-in camera provided with most cellphones and other mobile devices to generate the real-time video feed. In this case the device operates in video augmented reality by displaying the live video feed on the cellphone display as an underlay.

The disclosed approaches can also be used for updating an AR-based service manual. For example, if the service person encounters an unexpected problem, say due to use of a substitute part in the component of the particular deployed medical imaging device being serviced, then the live feed provided by the camera of the HUD may be used in conjunction with the authoring system to produce updated AR content appropriate for this substitute part.

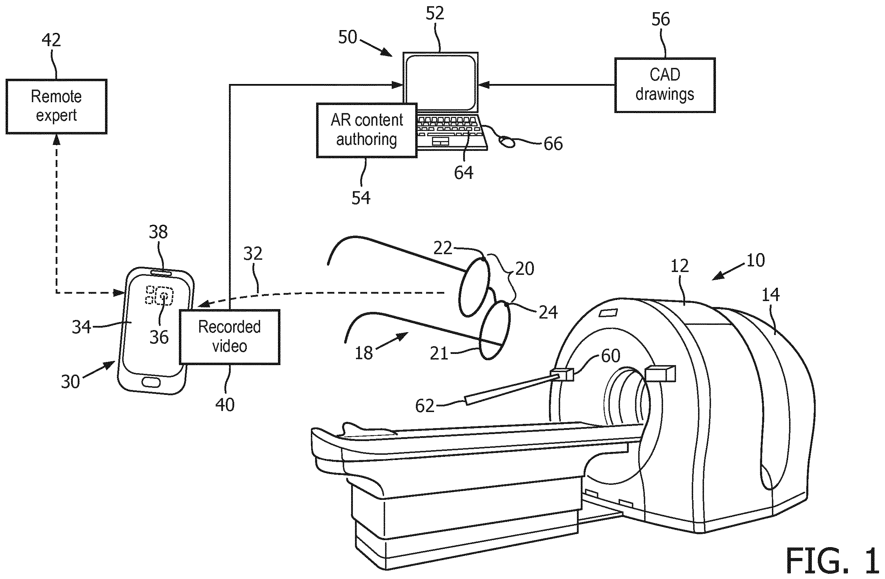

With reference to FIGURE 1, a system for recording a service call is illustrated. The subject of the illustrative service call is an imaging device **10,** which in this illustrative example is a hybrid imaging device including a transmission computed tomography (CT) imaging gantry **12** and a positron emission tomography (PET) imaging gantry **14,** that is, the illustrative imaging device is a CT/PET imaging device **10.** More generally, the subject of the service call could be any type of imaging device, e.g. a standalone PET or standalone CT imaging device, a magnetic resonance imaging (MRI) device, a gamma camera for single photon emission computed tomography (SPECT) imaging, an image guided therapy (iGT) device, or so forth. Even more generally, the disclosed AR based servicing guidance devices and methods may be applied to any type of system or device servicing performed in the field, e.g. may be applied to a radiation therapy delivery device, a research device such as a magnet, a cryogenic system, a factory robotic system, a processing furnace, or so forth. The service call is recorded using a mobile camera **18** capable of recording video, and preferably having a convenient form factor. In the illustrative example, the mobile camera **18** includes a stereo camera **20** mounted on eyeglasses **21.** The stereo camera **20** includes a left-eye camera **22** and a right-eye camera **24,** and thus advantageously acquires stereo video so as to simulate binocular human vision. By mounting the stereo camera **20** on the eyeglasses **21,** the mobile camera **18** provides a "first person" - if the eyeglasses **21** are worn by a service person who performs (or participates in performing) the servicing then the recorded video of the service call is advantageously from the viewpoint or vantage point of the service person. Instead of the illustrative mobile camera **18** employing eyeglasses **21** as the structural support, another eyewear form factor could be used, e.g. goggles, or a camera mounted on a headband or helmet or the like could provide a similar vantage for recording the video of the service call. By using the stereo camera **20** the recorded video is advantageously binocular in nature and can provide depth information for extracting three-dimensional (3D) information. However, in an alternative embodiment a monocular camera is employed - in this case computer vision can generally extract 3D information based on different vantage points provided by way of natural movement of the camera (due to movement of the service person's head during servicing). As another contemplated variant, a conventional optical camera may be augmented by a range camera to provide depth information.

A difficulty with the mobile camera **18** with the illustrative eyewear-mounted camera **20** is that it may provide limited support structure for mounting an electronic processor - that is, it may be difficult to integrate onto the eyeglasses **21** a microprocessor or microcontroller with sufficient processing capacity to handle the video generation and optional processing. This is addressed in the illustrative embodiment by having the mobile camera **18** in wireless communication with a mobile device **30,** such as an illustrative cellular telephone (cellphone, sometimes referred to as a smartphone when equipped to execute application programs or "apps") or a tablet computer. The wireless connection **32** may, by way of non-limiting illustration, be a Bluetooth^{™} wireless connection, WiFi connection, or other short- or intermediate-range wireless connection. A wired connection is also contemplated, e.g. a USB cable may physically connect the mobile camera **18** with the mobile device **30.** The illustrative mobile device **30** includes typical components such as an opaque display **34** disposed on a front side of the mobile device **30,** and a rear-facing camera **36** (occluded from view in FIGURE 1 and hence illustrated in phantom) arranged on an opposite backside of the mobile device **30.** As is typical for such mobile devices, the display **34** is preferably a touch-sensitive display, e.g. a capacitive touch-sensitive display, or a surface-acoustic wave (SAW) display, so that a user can interact by touch with the mobile device **30** to run application programs ("apps"), provide inputs, operate a "soft" keyboard, and/or so forth.

Recorded video **40** is transmitted via the wireless connection **32** from the eyewear-based mobile camera **18** to the mobile device **30.** The mobile device **30** typically also includes a microphone **38,** which may be used to provide an audio component for the recorded video **40,** or alternatively a microphone may be mounted on the eyeglasses **21** (not shown); as another alternative, the recorded video **40** may have no recorded sound (video-only). During the recording of the service call, the mobile device **30** may optionally be performing other tasks, e.g. by running other apps. For example, the mobile device **30** in the form of a cellphone may be used to telephonically discuss the service call with a remote expert **42** (e.g. a human expert with specialized knowledge about the particular service being performed, and/or about the particular device **10** or component of that device undergoing service).

As will be described next, the recorded video **40** provides the basis for authoring augmented vision (AR) content for use during a subsequent service call. To this end, as diagrammatically shown in FIGURE 1 the recorded video **40** is transferred to an AR content authoring device **50** in the form of a computer **52** executing instructions read from a non-transitory storage medium (not shown - such as a hard disk drive, RAID, or other magnetic storage medium; a flash memory, solid state drive, or other electronic storage medium; an optical disk or other optical storage medium; various combinations thereof; or so forth) to perform an AR content authoring method **54.** The AR content authoring may, for example, entail spatially registering computer aided design (CAD) drawings **56** with the recorded video **40** using computer vision (CV) processing such as Simultaneous Location and Mapping (SLAM) processing to align the AR content (e.g. part number annotations taken from the CAD drawings **56,** picture-in-picture (PIP) windows showing CAD drawings or portions thereof or animations generated from the CAD drawings **56,** and/or so forth) with the recorded video **40.**

It is to be appreciated that FIGURE 1 merely shows one illustrative arrangement for capturing the video **40** of the service call. As already mentioned, other types of eyewear or headwear (e.g. goggles, headband, helmet, et cetera) may serve as the support structure for the mobile camera **18** so as to provide a first-person view of the servicing process; additionally, as already mentioned the stereo camera **20** may be replaced by a camera of another type, e.g. a monocular camera, a camera-plus-range camera combination, and/or so forth. In other embodiments, the recorded video of the service call may not be from the first-person view of the service person. For example, in an alternative embodiment, the mobile camera comprises the mobile device **30** with its rear-facing camera **36** arranged on the backside of the mobile device **30** serving as the camera for recording the service call. In this case, the vantage will not be first-person, but the service person (or an assistant) can hold the mobile device **30** so as to direct the rear-facing camera **36** appropriately to record the entire service process or only portions of the service process of interest (e.g. difficult portions).

To assist in authoring the AR content, in some embodiments the service person performing the servicing captured by the recorded video **40** of the service call may actively point to a location of interest (LOI) **60** using a pointer **62** or other distinctive pointing mechanism (which could in some examples merely be the service person's finger or hand). In other embodiments, the LOIs are labeled after the recording of the recorded video **40,** e.g. by a user operating one or more user input devices (e.g. an illustrative keyboard **64** and/or mouse **66)** of the computer **52** to mark the LOIs in frames of the recorded video **40.**

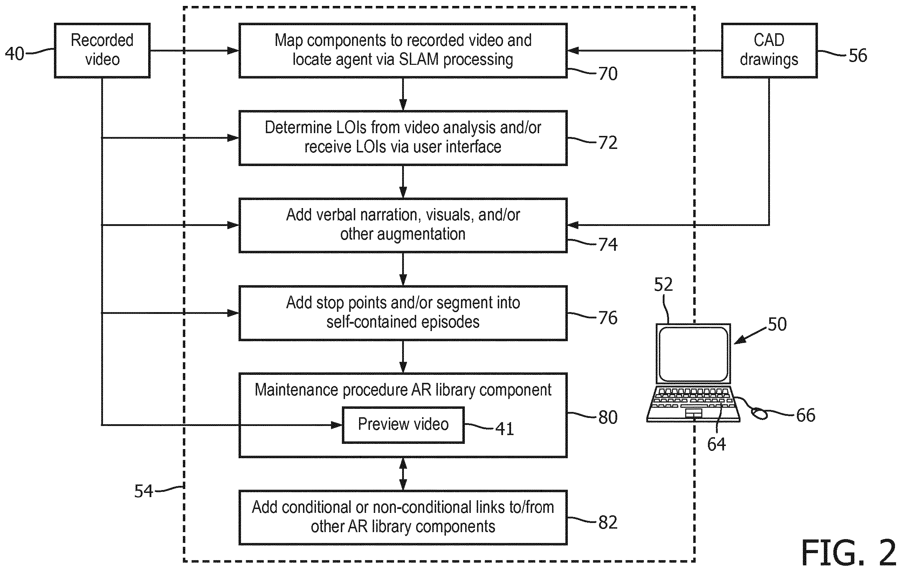

With reference now to FIGURE 2, an illustrative embodiment of the AR content authoring device **50** implemented by the computer **52** executing instructions read from a non-transitory storage medium (not shown) is described. The AR authoring process **54** receives as input the recorded video **40** and information from which AR content is to be generated, such as the CAD drawings **56** (which may optionally include data such as part numbers of components, 3D renderings, animations, and/or so forth). In an operation **70,** various components of the imaging device **10** (see FIGURE 1; more generally, various components of the system or device undergoing servicing) are mapped to the recorded video **40** using computer vision (CV) processing. In a preferred embodiment, the mapping operation **70** is performed using Simultaneous Location and Mapping (SLAM) processing which employs Bayesian inference or another machine learning technique to optimally map the location of the service person (assuming first-person video; or, the location of the mobile device **30** if the recorded video **40** is acquired by the mobile device **30)** and reference points on the component or device **10,** on the one hand, to the content of a sequence of observations provided by successive frames of the recorded video **40.** Optionally, *a priori* known information such as the spatial layout of the component reference points provided by the CAD drawings **56** may be used to improve the mapping **70.** The SLAM processing task may be formulated mathematically by the probabilistic formulation *P*(*c*₁(*t*), *c*₂*(t),* ... , *cₙ*(*t*)*, p*(*t*)|*f₁*, ... , *fₜ*) where *c*₁(*t*), *c*₂(*t*), ... , *cₙ*(*t*) are the locations of the reference points of the component or device **10** at a time *t* (where without loss of generality *n* reference points are assumed), *p*(*t*) is the location of the service person at time *t*, and *f*₁, ... , *fₜ* are the frames of the recorded video **40** up to the time *t*. Various SLAM algorithms known for robotic vision mapping, self-driving vehicle navigation technology, or so forth are suitably applied to implement the mapping operation **70.** In an operation **72,** the LOIs are received from a user via the user interfacing device(s) **64, 66** (e.g., by displaying a video frame from the recorded video **40** and providing for the user to click on an LOI using the mouse **66)** or are extracted automatically from the recorded video **40** during the SLAM processing **70.** This latter approach entails performing SLAM or other CV processing by the computer **52** to detect a user operation (e.g. pointing using the pointer **62,** see FIGURE 1) captured by the recorded video **40** which indicates at least one LOI (e.g. illustrative LOI **60** indicated in FIGURE 1) in the recorded video **40.** This indicated LOI **60** then becomes one of the reference points (*c_{LOI}*(*t*)) to be mapped in the SLAM processing **70.**

In an operation **74,** AR content is aligned with the recorded video **40** using the results of the SLAM processing **70** and LOI designations **72.** For example, an annotation such as a part number annotation, a CAD drawing or CAD drawing portion shown as a PIP window, or a CAD animation shown as a PIP window, may be added at the LOI or closely proximate to the LOI, so as to "label" the LOI with the part number of CAD information. In a more advanced approach, a wire frame drawing of a key part or part combination or assembly may be extracted from the CAD drawings **56** and overlaid as the AR content, again aligned using the mapping output by the SLAM processing **70** and LOI designations **72** with the actual image of the part(s) shown in the recorded video **40.** The thusly authored AR content may optionally be color-coded (e.g. using different colors to distinguish different parts of a parts assembly) or otherwise highlighted. AR content in the form of verbal narration may also be added. In this case, the AR content is assumed to have a temporal sequence aligning with the time sequence of frames making up the recorded video **40,** and the narration is added to be synced in time with when various servicing tasks are performed in the video. In an optional operation **76,** the AR content may be segmented in time by adding stop points and/or segmenting the AR content into self-contained episodes. For example, if the servicing involves removing a first assembly from the device **10** in order to reveal a second assembly that requires servicing, then the removal of the first assembly may be one episode, while the servicing of the revealed second assembly may be a separate and distinct episode. Stop points may be added to allow for stopping the AR content time progression to allow for manual operations - for example, if a part needs to be oiled before installing it may make sense to add a stop point during the oiling process.

The resulting authored AR content forms a maintenance procedure AR library component **80.** In some embodiments, as will be described later herein, the AR library component **80** may include or have access to the recorded video **40** which is stored (optionally after segmentation and/or adding stop points analogously to the AR content authoring operation **76)** as preview video **41** as diagrammatically indicated in FIGURE 2. This preview video **41,** if provided, is used to provide a preview of a servicing procedure including superimposed AR content upon request by the service person.

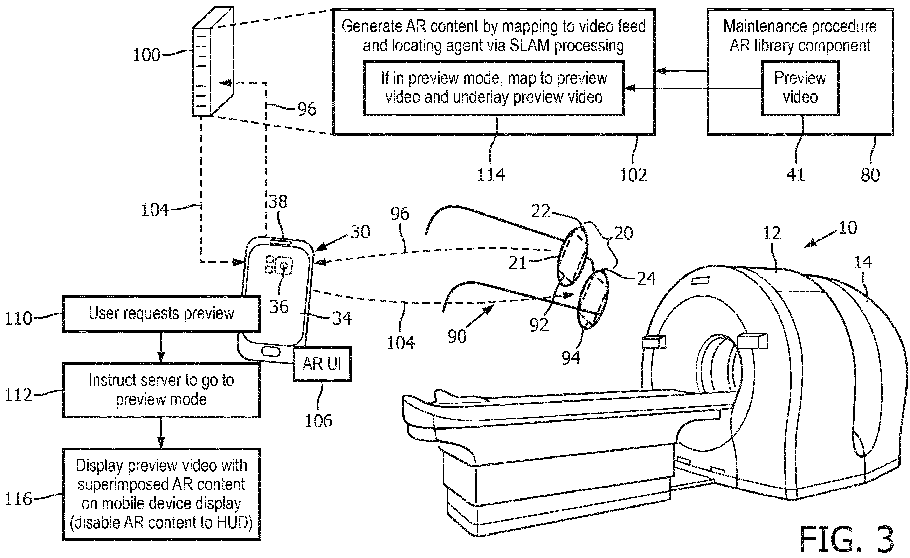

As part of an overall AR maintenance procedure library, the AR library component **80** may optionally be variously linked in an operation **82** with other AR library components to provide AR support for a sensible sequence of servicing operations. For example, consider a process of replacing the x-ray tube of the CT gantry **12** of FIGURE 1. This servicing entails opening the CT gantry **12** to access the x-ray tube, removing the x-ray tube, perhaps performing some setup or configuration of the new x-ray tube, installing the new x-ray tube, and then re-assembling the CT gantry **12.** Each of these steps may, in one approach, be supported by a separate AR library component which are then suitably linked together. Thus, the service person may initial load and view the CT gantry opening AR content library component - when this is completed the next library component (e.g. configuring the new x-ray tube) may be automatically linked and invoked, and so forth. In a variant embodiment, the linking operation **82** may be automated on the basis of video content, e.g. during playback of the AR content the live video feed (see discussion later herein referencing FIGURE 3) the live video feed may be analyzed using CV processing to detect the particular model, type, or other specific component under servicing, and may then call up the correct AR library component for that particular model, type, or other specific component.

With reference to FIGURE 3, the AR library component **80** generated by the AR content authoring described with reference to FIGURE 2 is suitably presented to a service person performing a subsequent service call (that is, a service call performed subsequently to the service call that was recorded to generate the recorded video **40** as described with reference to FIGURE 1). The AR content is presented using a suitable mobile device, such as an illustrative head-up display (HUD) **90** in the form of eyeglasses **21** with the stereo camera **20** mounted thereon. The HUD **90** is thus seen to be similar to the eyewear-based mobile camera **18** already described with reference to FIGURE 1; however, the HUD **90** further includes a transparent display, in the illustrative case comprising a left transparent display **92** mounted in the left eye frame of the eyeglasses **21,** and a right transparent display **94** mounted in the left eye frame of the eyeglasses **21.** The HUD **90** thus constitutes a see-through AR display in which the user (e.g. service person) sees the actual scene directly by viewing through the transparent display **92, 94** while AR content may be superimposed on this actually viewed scene by displaying the AR content on the transparent display **92, 94.** The illustrative eyeglasses-based HUD **90** is an example, and numerous other HUD designs are contemplated. In a variant embodiment, the HUD employs goggles with a single lens extending across both left and right eyes - in this embodiment the transparent display may be a single transparent display likewise extending across both left and right eyes.

A see-through AR display has substantial advantages in that the service person directly sees the actual scene (e.g. actually sees the component being serviced) so as to have the maximal visual acuity provided by the person's vision. (If the service person is nearsighted or otherwise requires prescription eyeglasses or contacts, then the service person suitably either wears the prescription contacts in conjunction with using the HUD **90,** or optionally may have the glass forming the transparent display **92, 94** modified to incorporate the ocular prescription). However, it is contemplated in an alternative embodiment to employ a video AR display. In this alternative embodiment, the transparent display **92, 94** is replaced by an opaque display which displays a video feed of the actual scene captured by the stereo camera **20.** The displayed video feed then serves as an underlay of the displayed AR content. This approach using a video AR display has the disadvantage that generally the video display will be of coarser resolution and/or may have other optical degradation compared with the direct view of the actual scene provided by the illustrative see-through HUD **90.**

To provide AR content for supporting the service procedure, a live video feed **96** is communicated to the mobile device **30** (e.g. cellphone or tablet computer) via Bluetooth^{™} or another short- to intermediate-range wireless communication protocol (or, alternatively, view a wired USB or other wired connection) and the mobile device **30** in turn relays the live video feed **96** to a server computer **100,** e.g. via a cellular communication protocol such as 4G, or via a WiFi link to an Internet Service Provider (ISP) and/or hospital electronic network, or so forth. The server computer **100** executes instructions stored on a non-transitory storage medium (not shown - such as a hard disk drive, RAID, or other magnetic storage medium; a flash memory, solid state drive, or other electronic storage medium; an optical disk or other optical storage medium; various combinations thereof; or so forth) to perform alignment **102** to map AR content of the AR library component **80** to the live video feed **96** and to locate the agent (in this embodiment the HUD **90).** The alignment **102** may be performed by SLAM processing analogously to the mapping **70** (see FIGURE 2) previously described. The AR content that is mapped to the live video feed **96** suitably includes the AR content defined in the AR library component **80,** e.g. part number annotations, annotated picture-in-picture (PIP) windows displaying CAD drawings or portions thereof and/or CAD animations, accompanying verbal narration, and/or so forth. For example, the aligned AR content may include a marker aligned with a LOI identified in the live video feed **96** by the SLAM processing. As another example, the aligned AR content may include an annotation (such as a part number annotation, a CAD drawing or CAD drawing portion, or a CAD animation) aligned with a LOI identified in the live video **96** feed by the CV processing **102.**

The resulting AR content **104** is transmitted to the mobile device **30** via the 4G, WiFi/ISP/Internet or other communication pathway, and in turn is transmitted from the mobile device **30** to the HUD **90** via the Bluetooth^{™} or other short- to intermediate-range wireless communication. At the HUD **90,** the AR content **104** is displayed on the transparent display **92, 94** as opaque or translucent text and/or images which the service person visually perceives as being superimposed on the view of the actual scene seen by the service person when looking through the transparent display **92, 94.** (In the alternative embodiment in which a video AR display is employed, the live video feed **96** is displayed as an underlay over which the AR content **104** is superimposed).

The HUD **90** optionally includes a user interface for controlling. In one illustrative embodiment, this is implemented by way of an AR user interface (UI) application program ("AR UI app") **106** that may be run on the mobile device **30.** Via the AR UI app **106,** the service person can perform various control operations, such as: turn the AR content on or off (the latter being useful, for example, if the service person is confident that he or she does not need the assistance of the AR content, and/or if the AR content is occluding the view of the component being serviced); selecting to execute a particular AR content episode; pause the AR content (which, again, is generally presented as a time sequence synced with the live video feed **96);** adjust the brightness, transparency, and/or other display characteristics of the AR content; turn audio narration on or off; and/or so forth. In some embodiments, the AR UI app **106** may provide one or more mechanisms for the service person to interact with the AR content - for example, if the HUD **90** includes gaze tracking technology then a suitable control mechanism may be to direct gaze at an AR content element (e.g. PIP window, part number annotation, or so forth) and then speak a command which is detected by the microphone **38** and processed by speech recognition to interpret the spoken command. Rather than via spoken command, the user command may instead be input via soft controls (buttons, switches, soft keyboard, et cetera) displayed on the touch-sensitive display **34** of the mobile device **30.** These are merely illustrative user interfacing capabilities and control input mechanisms; more generally, substantially any type of user interfacing capability and/or control input mechanism suitably used for controlling presentation of AR content may be employed.

With continuing reference to FIGURE 3, in some embodiments a servicing preview may be provided. As already noted, the preview video **41** may be provided for this purpose, which comprises the recorded video **40** used as the basis for authoring the AR content **80** (as previously described with reference to FIGURE 2) with some optional processing (e.g. insertion of stop points and/or segmentation into episodes, *cf.* operation **76** of FIGURE 2). To employ the preview mode, the user request preview in an operation **110,** e.g. using the AR UI app **106.** In a responsive operation **112,** the server computer **100** is instructed to switch to preview mode (e.g., command sent along the same 4G or other communication pathway used to convey the live video feed **96** to the server **100;** optionally when switching to preview mode this communication of the live video feed to the server is turned off). The command **112** causes the server to perform a modification **114** to the AR alignment process **102.** This modification includes substituting the preview video **41** for the live video feed **96,** so that the AR content is aligned with the preview video **41,** and adding the preview video **41** as an underlay of the AR content. This combination of the AR content aligned to the preview video together with the underlay preview video then becomes the AR content **104** that is transmitted back to the mobile device **30.** At the mobile device **30,** in an operation **116** the preview video with superimposed AR content is displayed on the display **34** of the mobile device (while, at the same time, the AR content feed to the HUD **90** is turned off). The service person can then view the preview on the display **34** of the mobile device **30** without being hindered by extraneous AR content showing on the transparent display **92, 94.** Display of the preview on the display **34** of the mobile device **30** is generally preferable since this content is no longer being spatially aligned with the live video feed from the stereo camera **20;** however, in another embodiment it is contemplated to display the preview on the transparent display **92, 94.**

The illustrative embodiment of FIGURE 3 employs the server computer **100** to perform the computationally complex SLAM processing **102,** which is beneficial if the mobile device **30** and the HUD **90** have limited processing capability. Likewise, using the mobile device **30** running the AR UI app **106** to provide user interfacing leverages the touch-sensitive display **34** and optionally other features (e.g. microphone **38)** of the mobile device **30** to provide user-friendly interfacing. In alternative embodiments, these operations/processing may be otherwise distributed. In one contemplated embodiment, all processing and user interfacing is integrated with the HUD, which in this contemplated embodiment includes a flash memory or the like to store the AR library component **80** (or downloads this content from a cloud server) so as to provide a single-unit AR based servicing guidance device. As another variant, the operation **102** may be performed at the mobile device **30,** using the AR library component **80** either downloaded in its entirety to the mobile device **30** or streamed from a cloud server. These again are merely illustrative variants.

Moreover, the illustrative HUD **90** may be replaced by another mobile device presenting the AR content. For example, the mobile device **30,** e.g. cellphone or tablet computer, may serve to present the AR content (in this variant embodiment the HUD **90** is omitted). To use the mobile device **30** to present AR content supporting a service call, the service person points the rear-facing camera **36** at the component being serviced, and the live video feed **96** is recorded by the rear-facing camera **36.** The server computer processes the live video feed via operation **102** as already described to generate the AR content, and transmits it back to the mobile device **30** which displays the live video feed **96** with the AR content superimposed (or, alternatively, the superimposition of the AR content on the live video feed **96** is performed at the server computer **100** which then transmits back the AR content with the underlay live video feed combined). Advantageously, the service person can view the display **34** of the mobile device **30** with the rear-facing camera **36** pointed at the component being serviced, so that the mobile device **30** operates as a video AR display.

With comparative reference to FIGURES 1 and 3, it will be appreciated that in some embodiments the HUD **90** used in the AR content support could also be used as the mobile camera **18** for recording the recorded video **40** of FIGURE 1, that is, the HUD **90** could be substituted for the mobile camera **18** of FIGURE 1. Such interoperability has a valuable advantage: The live video feed **96** captured by the HUD **90** during a service call can optionally be used as the recorded video **40** of FIGURE 1, to serve as a basis for performing further AR authoring as per FIGURE 2 to generate updated or additional AR content. For example, in the previous example of replacing an x-ray tube of the CT gantry **12,** suppose the service person, using the HUD **90** to provide AR content, has a new model x-ray tube that is different from the model that was installed in the service call that was recorded to create the AR content. In this case, the service person can record the live video feed **96** as he or she installs the new-model x-ray tube. This may involve obtaining telephonic advice from a remote expert **42** as previously described with reference to FIGURE 1. The recorded live video feed **96** of the installation of the new-model x-ray tube then becomes the recorded video **40** serving as the basis for performing the AR content authoring of FIGURE 2. Thereafter, when the new-model x-ray tube is installed in subsequent service calls the newly authored AR content appropriate for the new-model x-ray tube can be used to provide the AR-based guidance. In performing the update AR content authoring as per FIGURE 2, in the operation **82** a link can be added that, for a given subsequent service call, loads either the AR content for supporting installation of the old-model tube or the AR content supporting installation of the new-model tube, depending upon which model x-ray tube is being installed. This link may be manual (e.g. the user inputs the x-ray tube model number via the AR UI **106** to load the correct AR support content) or automated (e.g., when the service person first gazes upon the x-ray tube the model number or a model-distinguishing feature is detected via CV processing and used to link in the correct AR content for the x-ray tube being installed.

In the illustrative embodiments, the AR content authoring method **54** of FIGURE 2 processes recorded video **40** of a service call performed to repair or maintain a medical imaging device in order to generate the AR content **80** for subsequent use in delivery of AR-based service instructions as described with reference to FIGURE 3. However, the AR content authoring method **54** of FIGURE 2 may additionally or alternatively be applied to process recorded video **40** for other purposes, such as to create an annotated AR log entry to reflect the maintenance or repair action performed on the imaging device **10.** The authored AR content can be used as a record of maintenance checks, so as to verify maintenance and provide a tool for correlating the requirements of planned maintenance.

In maintenance or repair logging applications, the AR content log entry typically comprises the recorded video **40** together with AR content annotations created in the operations **72, 74,** and the AR content log entry (including the recorded video **40** and AR annotations) is suitably stored in the electronic service log of the imaging device **10.** The LOI designations operations **72** may be performed by the service person immediately after completion of the service call to identify locations he or she serviced, and the operation **74** may entail the service person adding AR content such as part number annotation, verbal and/or textual (optionally speech-to-text) verbal and/or textual explanation of the service performed and/or any unusual aspects of that service, inspection observations made by the service person serving as augmentation to the recorded video of the inspected components, and/or so forth. In these embodiments, the user operations **72, 74** may, for example, be performed on a tablet computer, cellphone, or other portable electronic device carried by the service person. Some annotated AR content may be automatically generated, e.g. adding timestamp information, identification of service personnel (alternatively this could be manually added AR content), CV-based automatic identification of components or other objects appearing in the recorded video **40,** and/or so forth.

The invention has been described with reference to the preferred embodiments. Modifications and alterations may occur to others upon reading and understanding the preceding detailed description. It is intended that the invention be construed as including all such modifications and alterations insofar as they come within the scope of the appended claims

## Claims

1. An augmented reality (AR) based servicing guidance system comprising:
a mobile device (30, 90) including a display (34, 92, 94) and a camera (20, 36) utilized by a first service person, and wherein the mobile device is configured to receive and transmit data via at least one communication pathway;
a computer (52) programmed to perform CV processing (54) to generate AR content (80) by operations including aligning (70) components of a device or system with recorded video (40) of a service call of the device or the system including designating (72) at least one location of interest (LOI) identified in the recorded video of the service call by a user input or a second service person, wherein the aligning (70) comprises Simultaneous Location and Mapping (SLAM) processing, and wherein the AR content (80) includes a part number annotation, a computer aided design (CAD) drawing or CAD drawing portion, or a CAD animation aligned with locations of interest (LOI), and wherein the second service person is performing the servicing of the device or the system captured by the recorded video (40) with a mobile camera (18), and wherein the mobile camera (18) and computer (52) are configured to enable the recorded video (40) to be transferred from the mobile camera (18) to the computer (52) via at least one communication pathway, and
a server computer (100) programmed to perform computer vision (CV) processing (102) to receive the AR content (80) and to align the AR content (80) with a live video feed (96) captured by the camera (20, 36) of the mobile device (30, 90), wherein the CV processing (102) comprises Simultaneous Location and Mapping (SLAM) processing to align the AR content (80) with the live video feed (96) produced by the camera (20, 36) of the mobile device (30, 90) to produce aligned AR content (104), and wherein the aligned AR content (104) includes from the AR content (80) a part number annotation, a computer aided design (CAD) drawing or CAD drawing portion, or a CAD animation aligned with a location of interest (LOI) identified in the live video (96) feed by the CV processing (102), and wherein the server computer is configured to receive and transmit data via at least one communication pathway; and
wherein the mobile device (30, 90) is programmed to transmit the live video feed (96) produced by the camera (20,36) of the mobile device (30, 96) to the server computer (100) via a communication pathway between the mobile device (30, 96) and the server computer (100) and to receive the aligned AR content (104) from the server computer (100) via a communication pathway between the server computer and the mobile device (30, 96) and display on the display (34, 92, 94) of the mobile device (30, 90) the aligned AR content (104); and
wherein the aligned AR content (104) is presented to the first service person performing a subsequent service call that is a service call performed subsequently to the service call that was recorded to generate the recorded video (40) by the second service person.

2. The AR based service guidance system of claim 1 wherein with respect to the server computer (100) the aligned AR content includes a marker aligned with a location of interest (LOI) identified in the live video feed (96) by the CV processing (102).

3. The AR based service guidance system of any one of claims 1-2 wherein:
the mobile device (30, 90) comprises a heads-up display (HUD) (90) in which the display (92, 94) is a transparent display and the camera (20) is arranged to capture the live video feed (96) corresponding to a viewpoint of a user of the HUD looking through the transparent display; and
the processor (30, 100) is programmed to display on the transparent display of the HUD the AR content aligned with the live video feed without displaying the live video feed on the transparent display.

4. The AR based service guidance system of any one of claims 1-2 wherein:
the mobile device (30) comprises a cellular telephone (cellphone) or tablet computer in which the display is an opaque display (34) disposed on a front side of the cellphone or tablet computer and the camera is a rear-facing camera (36) arranged on an opposite backside of the cellphone or tablet computer; and
the processor (30, 100) is programmed to display on the opaque display of the cellphone or tablet computer both the AR content aligned with the live video feed (96) captured by the rear-facing camera (36) and the live video feed as an underlay of the AR content.

5. The AR based service guidance system of any one of claims 1-4 wherein the server computer (100) is further programmed to perform a servicing preview by performing the CV processing (102) to align the AR content (80) with preview video (41) substituted for the live video feed (96) produced by the camera (20, 36) of the mobile device (30, 90) and simultaneously displaying on the display (34) of the mobile device both the AR content aligned with the preview video and the preview video displayed as an underlay of the AR content.

6. An augmented reality (AR) based servicing guidance method comprising:
a mobile device (30, 90) including a display (34, 92, 94) and a camera (20, 36) utilized by a first service person, and wherein the mobile device is configured to receive and transmit data via at least one communication pathway;
performing by a computer (52) CV processing (54) to generate AR content (80) by operations including aligning (70) components of a device or system with recorded video (40) of a service call of the device or the system including designating (72) at least one location of interest (LOI) identified in the recorded video of the service call by a user input or a second service person, wherein the aligning (70) comprises Simultaneous Location and Mapping (SLAM) processing, and wherein the AR content (80) includes a part number annotation, a computer aided design (CAD) drawing or CAD drawing portion, or a CAD animation aligned with locations of interest (LOI), and wherein the second service person is performing the servicing of the device or the system captured by the recorded video (40) with a mobile camera (18), and wherein the recorded video (40) is transferred from the mobile camera (18) to the computer (52) via at least one communication pathway,
transmitting, by a mobile device (30, 90) utilized by a first service person, live video feed (96) produced by a camera (20,36) of the mobile device (30, 96) to a server computer (100) via a communication pathway between the mobile device (30, 96) and the server computer (100), wherein the mobile device (30, 90) includes a display (34, 92, 94), and wherein the first service person is performing a subsequent service call that is a service call performed subsequently to the service call that was recorded to generate the recorded video (40) by the second service person,
receiving by the server computer (100) the AR content (80) and performing by the server computer (100) computer vision (CV) processing (102) to align the AR content (80) with the live video feed (96) captured by the camera (20, 36) of the mobile device (30, 90) utilized by a first service person, wherein the CV processing (102) comprises Simultaneous Location and Mapping (SLAM) processing to align the AR content (80) with the live video feed (96) produced by the camera (20, 36) of the mobile device (30, 90) to produce aligned AR content (104), and wherein the aligned AR content (104) includes from the AR content (80) a part number annotation, a computer aided design (CAD) drawing or CAD drawing portion, or a CAD animation aligned with a location of interest (LOI) identified in the live video (96) feed by the CV processing (102); and
receiving, by the mobile device (30, 90), the aligned AR content (104) from the server computer (100) via a communication pathway between the server computer and the mobile device (30, 96), and displaying on the display (34, 92, 94) of the mobile device (30, 90) the aligned AR content (104).

7. The AR based service guidance method of claim 6 wherein the mobile device (30, 90) comprises a heads-up display (HUD) (90) in which the display is a transparent display (92, 94) and the camera (20) is arranged to capture the live video feed (96) corresponding to a viewpoint of a user of the HUD looking through the transparent display, and the presenting of the authored AR content includes:
displaying on the transparent display of the HUD the AR content (80) aligned with the live video feed without displaying the live video feed on the transparent display.

8. The AR based service guidance method of any one of claims 6-7 wherein the mobile device (30) comprises a cellular telephone (cellphone) or tablet computer in which the display is an opaque display (34) disposed on a front side of the cellphone or tablet computer and the camera is a rear-facing camera (36) arranged on an opposite backside of the cellphone or tablet computer, and the presenting of the authored AR content includes: displaying on the opaque display of the cellphone or tablet computer both the AR content (80) aligned with the live video feed (96) captured by the rear-facing camera (36) and the live video feed as an underlay of the AR content.

9. The AR based service guidance method of any one of claims 6-8 further comprising:
using the server computer (100) and the mobile device (30, 90), performing a servicing preview by performing the CV processing (102) to align the AR content (80) with preview video (41) substituted for the live video feed (96) produced by the camera (20, 36) of the mobile device and simultaneously displaying on the display (34) of the mobile device both the AR content aligned with the preview video and the preview video displayed as an underlay of the AR content.

## Patentansprüche

1. Auf erweiterter Realität (AR) basierendes Serviceleitsystem, umfassend:
eine mobile Vorrichtung (30, 90), einschließlich eines Displays (34, 92, 94) und einer Kamera (20, 36), die von einem ersten Servicemitarbeiter verwendet wird und wobei die mobile Vorrichtung so ausgebildet ist, dass sie Daten über mindestens einen Kommunikationsweg empfangen und senden kann;
einen Computer (52), der so programmiert ist, dass er CV-Verarbeitung (54) durchführt, um AR-Inhalte (80) durch Vorgänge zu erzeugen, einschließlich Ausrichten (70) von Komponenten einer Vorrichtung oder eines Systems mit einem aufgezeichneten Video (40) eines Serviceeinsatzes der Vorrichtung oder Systems, einschließlich der Festlegung (72) mindestens eines Ortes von Interesse (LOI), der in der aufgezeichneten Videoaufnahme des Serviceeinsatzes durch eine Benutzereingabe oder einen zweiten Servicemitarbeiter identifiziert wurde, wobei die Ausrichtung (70) Simultane Positionsbestimmung und Kartierung-Verarbeitung (SLAM) umfasst, und wobei die AR-Inhalte (80) eine Teilnummerangabe, eine Computer-Aided-Design-, (CAD), Zeichnung oder einen CAD-Zeichnungsausschnitt oder eine mit den Orten von Interesse (LOI) ausgerichtete CAD-Animation einschließen und wobei der zweite Servicemitarbeiter die Wartung der Vorrichtung oder Systems durchführt, die im aufgezeichneten Video (40) mit einer mobilen Kamera (18) erfasst wird, und wobei die mobile Kamera (18) und der Computer (52) so ausgebildet sind, dass das aufgezeichnete Video (40) über mindestens einen Kommunikationsweg von der mobilen Kamera (18) zum Computer (52) übertragen werden kann, und
einen Servercomputer (100), der so programmiert ist, dass er eine Computer-Vision- (CV) Verarbeitung (102) durchführt, um den AR-Inhalt (80) zu empfangen und den AR-Inhalt (80) mit einem Live-Videostream (96) auszurichten, der von der Kamera (20, 36) der mobilen Vorrichtung (30, 90) aufgenommen wird, wobei die CV-Verarbeitung (102) eine simultane Positionsbestimmung und Kartierung- (SLAM) Verarbeitung umfasst, um den AR-Inhalt (80) mit dem Live-Videostream (96) der Kamera (20, 36) der mobilen Vorrichtung (30, 90) auszurichten und so einen ausgerichteten AR-Inhalt (104) zu erzeugen und wobei der ausgerichtete AR-Inhalt (104) aus dem AR-Inhalt (80) eine Teilenummer, eine Computer-Aided-Design-, (CAD), Zeichnung oder einen CAD-Zeichnungsausschnitt oder eine CAD-Animation einschließt, die mit einem im Live-Videostream (96) durch die CV-Verarbeitung (102) identifizierten Ort von Interesse (LOI) ausgerichtet ist, und wobei Servercomputer so ausgebildet ist, dass er Daten über mindestens einen Kommunikationsweg empfängt und sendet; und
wobei die mobile Vorrichtung (30, 90) so programmiert ist, dass sie den von der Kamera (20, 36) der mobilen Vorrichtung (30, 96) erzeugten Live-Videostream (96) über einen Kommunikationspfad zwischen der mobilen Vorrichtung (30, 96) und dem Servercomputer (100) an den Servercomputer (100) überträgt und den ausgerichteten AR-Inhalt (104) vom Servercomputer (100) über einen Kommunikationspfad zwischen dem Servercomputer und den ausgerichteten AR-Inhalt (104) der mobilen Vorrichtung (30, 96) empfängt und auf dem Display (34, 92, 94) der mobilen Vorrichtung (30, 90) anzeigt; und
wobei der ausgerichtete AR-Inhalt (104) dem ersten Servicemitarbeiter präsentiert wird, der einen nachfolgenden Serviceeinsatz durchführt, der ein Serviceeinsatz ist, der im Anschluss an den Serviceeinsatz durchgeführt wird, der vom zweiten Servicemitarbeiter aufgezeichnet wurde, um das aufgezeichnete Video (40) zu erzeugen.

2. AR-basierte Serviceleitsystem nach Anspruch 1, wobei der ausgerichtete AR-Inhalt in Bezug auf den Serverrechner (100) eine Markierung umfasst, die mit einem im Live-Videofeed (96) durch die CV-Verarbeitung (102) identifizierten Ort von Interesse (LOI) ausgerichtet ist.

3. AR-basierte Serviceleitsystem nach einem der Ansprüche 1-2, wobei:
die mobile Vorrichtung (30, 90) ein Head-up-Display (HUD) (90) umfasst, bei dem das Display (92, 94) ein transparentes Display ist und die Kamera (20) so angeordnet ist, dass sie den Live-Videostream (96) aus der Perspektive eines Benutzers des HUD erfasst, der durch das transparente Display schaut; und
der Prozessor (30, 100) so programmiert ist, dass er auf dem transparenten Display des HUD die mit dem Live-Videofeed abgestimmten AR-Inhalte anzeigt, ohne den Live-Videofeed auf dem transparenten Display anzuzeigen.

4. AR-basierte Serviceleitsystem nach einem der Ansprüche 1-2, wobei:
die mobile Vorrichtung (30) ein Mobiltelefon (Handy) oder einen Tablet-Computer umfasst, bei dem es sich um ein undurchsichtiges Display (34) auf der Vorderseite des Mobiltelefons oder Tablet-Computers und eine nach hinten gerichtete Kamera (36) auf der gegenüberliegenden Rückseite des Mobiltelefons oder Tablet-Computers handelt; und
der Prozessor (30, 100) so programmiert ist, dass er auf dem undurchsichtigen Display des Mobiltelefons oder Tablet-Computers sowohl den AR-Inhalt, der mit dem von der rückseitigen Kamera (36) aufgenommenen Live-Videofeed (96) übereinstimmt, als auch den Live-Videofeed als Unterlage für den AR-Inhalt anzeigt.

5. AR-basierte Serviceleitsystem nach einem der Ansprüche 1-4, wobei der Servercomputer (100) weiter so programmiert ist, dass er eine Servicevorschau durchführt, indem er die CV-Verarbeitung (102) durchführt, um den AR-Inhalt (80) mit dem Vorschauvideo (41) auszurichten, das anstelle des Live-Videofeeds (96) der Kamera (20, 36) der mobilen Vorrichtung (30, 90) verwendet wird, und gleichzeitig auf dem Display (34) der mobilen Vorrichtung sowohl den mit dem Vorschauvideo abgeglichenen AR-Inhalt als auch das als Unterlage des AR-Inhalts angezeigte Vorschauvideo darstellt.

6. Auf erweiterter Realität (AR) basierendes Serviceleitverfahren, umfassend:
eine mobile Vorrichtung (30, 90), einschließlich eines Displays (34, 92, 94) und einer Kamera (20, 36), die von einem ersten Servicemitarbeiter verwendet wird und wobei die mobile Vorrichtung so ausgebildet ist, dass sie Daten über mindestens einen Kommunikationsweg empfangen und senden kann;
Durchführen von CV-Verarbeitungen (54) durch einen Computer (52), um AR-Inhalte (80) durch Vorgänge zu erzeugen, einschließlich Ausrichten (70) von Komponenten einer Vorrichtung oder Systems mit dem aufgezeichneten Video (40) eines Serviceeinsatzes der Vorrichtung oder Systems, einschließlich der Festlegung (72) mindestens eines im aufgezeichneten Video des Serviceeinsatzes identifizierten Ortes von Interesse (LOI) durch eine Benutzereingabe oder einen zweiten Servicemitarbeiter, und wobei die Ausrichtung (70) Simultane Positionsbestimmung und Kartierung- (SLAM) Verarbeitung umfasst, und wobei die AR-Inhalte (80) eine Teilenummerngabe, eine Computer-Aided-Design-, (CAD), Zeichnung oder einen CAD-Zeichnungsausschnitt oder eine mit Orten von Interesse (LOI) ausgerichtete CAD-Animation einschließen, und wobei der zweite Servicemitarbeiter die Wartung der Vorrichtung oder Systems durchführt, die im aufgezeichneten Video (40) mit einer mobilen Kamera (18) erfasst wird, und wobei das aufgezeichnete Video (40) von der mobilen Kamera (18) über mindestens einen Kommunikationsweg an den Computer (52) übertragen wird,
Übertragen, durch eine mobile Vorrichtung (30, 90), eines Live-Videobildes (96), das von einer Kamera (20, 36) der mobilen Vorrichtung (30, 96), die von einem ersten Servicemitarbeiter verwendet wird, erzeugt wird, an einen Servercomputer (100) über einen Kommunikationspfad zwischen der mobilen Vorrichtung (30, 96) und dem Servercomputer (100), wobei die mobile Vorrichtung (30, 90) ein Display (34, 92, 94) einschließt und der erste Servicemitarbeiter einen nachfolgenden Serviceeinsatz durchführt, der ein Serviceeinsatz ist, der im Anschluss an den Serviceeinsatz durchgeführt wird, der zur Erzeugung des aufgezeichneten Videos (40) durch den zweiten Servicemitarbeiter aufgezeichnet wurde,
Empfangen, durch den Servercomputer (100), des AR-Inhalts (80) und Durchführen, durch den Servercomputer (100), einer Computer-Vision- (CV) Verarbeitung (102), um den AR-Inhalt (80) mit dem Live-Videostream (96) auszurichten, der von der Kamera (20, 36) der mobilen Vorrichtung (30, 90) eines ersten Servicemitarbeiters aufgenommen wird, wobei CV-Verarbeitung (102) die simultane Positionsbestimmung und Kartierung- (SLAM) Verarbeitung umfasst, um den AR-Inhalt (80) mit dem Live-Videostream (96) der Kamera (20, 36) der mobilen Vorrichtung (30, 90) auszurichten und so einen ausgerichteten AR-Inhalt (104) zu erzeugen, und wobei der ausgerichtete AR-Inhalt (104) aus dem AR-Inhalt (80) eine Teilenummer, eine Computer-Aided-Design-, (CAD), Zeichnung oder einen CAD-Zeichnungsausschnitt oder eine CAD-Animation einschließt, die mit einem im Live-Videostream (96) identifizierten Ortes von Interesse (LOI) durch die CV-Verarbeitung (102) ausgerichtet ist.
Empfangen des ausgerichteten AR-Inhalts (104) durch die mobile Vorrichtung (30, 90) vom Servercomputer (100) über einen Kommunikationspfad zwischen dem Servercomputer und der mobilen Vorrichtung (30, 96) und Anzeigen des ausgerichteten AR-Inhalts (104) auf dem Display (34, 92, 94) der mobilen Vorrichtung (30, 90).

7. AR-basierte Serviceleitverfahren nach Anspruch 6, wobei die mobile Vorrichtung (30, 90) ein Head-up-Display (HUD) (90) umfasst, dessen Display ein transparentes Display (92, 94) ist, und die Kamera (20) so angeordnet ist, dass sie den Live-Videostream (96) aus der Perspektive eines Benutzers des HUD erfasst, der durch das transparente Display schaut, und die Präsentation der erstellten AR-Inhalte einschließt:
Anzeigen des AR-Inhalts (80) auf dem transparenten Display des HUD, ausgerichtet auf den Live-Videostream, ohne den Live-Videostream auf dem transparenten Display anzuzeigen.

8. AR-basierte Serviceleitverfahren nach einem der Ansprüche 6-7, wobei die mobile Vorrichtung (30) ein Mobiltelefon (Handy) oder einen Tablet-Computer umfasst, dessen Display ein undurchsichtiges Display (34) ist, angebracht auf der Vorderseite des Mobiltelefons oder Tablet-Computers, und dessen Kamera eine nach hinten gerichtete Kamera (36) ist, die auf der gegenüberliegenden Rückseite des Mobiltelefons oder Tablet-Computers angeordnet ist, und die Darstellung der erstellten AR-Inhalte einschließt:
Anzeigen, auf dem undurchsichtigen Display des Mobiltelefons oder Tablet-Computers sowohl des AR-Inhalts (80), der mit dem von der rückseitigen Kamera (36) aufgenommenen Live-Videofeed (96) übereinstimmt, als auch der Live-Videofeed als Unterlage für den AR-Inhalt.

9. AR-basiertes Serviceleitverfahren nach einem der Ansprüche 6-8, weiter umfassend:
unter Verwendung des Servercomputers (100) und der mobilen Vorrichtung (30, 90), Durchführen einer Servicevorschau, indem die CV-Verarbeitung (102) durchgeführt wird, um den AR-Inhalt (80) mit dem Vorschauvideo (41) auszurichten, das anstelle des Live-Videofeeds (96) der Kamera (20, 36) der mobilen Vorrichtung verwendet wird, und gleichzeitig auf dem Display (34) der mobilen Vorrichtung sowohl der mit dem Vorschauvideo abgeglichene AR-Inhalt als auch das Vorschauvideo als Unterlage des AR-Inhalts angezeigt werden.

## Revendications

1. Système de guidage de maintenance basé sur la réalité augmentée (AR) comprenant :
un dispositif mobile (30, 90) incluant un écran (34, 92, 94) et une caméra (20, 36) utilisés par un premier technicien de service, et dans lequel le dispositif mobile est configuré pour recevoir et transmettre des données via au moins une voie de communication ;
un ordinateur (52) programmé pour réaliser un traitement CV (54) afin de générer un contenu AR (80) par des opérations incluant l'alignement (70) de composants d'un dispositif ou d'un système sur une vidéo enregistrée (40) d'un appel de service du dispositif ou du système incluant la désignation (72) d'au moins un emplacement d'intérêt (LOI) identifié dans la vidéo enregistrée de l'appel de service par une entrée utilisateur ou un second technicien de service, dans lequel l'alignement (70) comprend un traitement de localisation et de cartographie simultanées (SLAM), et dans lequel le contenu AR (80) inclut une annotation de numéro de pièce, un dessin de conception assistée par ordinateur (CAO) ou une partie de dessin CAO, ou une animation CAO alignée sur des emplacements d'intérêt (LOI), et dans lequel le second technicien de service réalise la maintenance du dispositif ou du système capturé par la vidéo enregistrée (40) à l'aide d'une caméra mobile (18), et dans lequel la caméra mobile (18) et l'ordinateur (52) sont configurés pour permettre le transfert de la vidéo enregistrée (40) de la caméra mobile (18) vers l'ordinateur (52) via au moins une voie de communication, et
un ordinateur serveur (100) programmé pour réaliser un traitement de vision par ordinateur (CV) (102) afin de recevoir le contenu AR (80) et d'aligner le contenu AR (80) sur un flux vidéo en direct (96) capturé par la caméra (20, 36) du dispositif mobile (30, 90), dans lequel le traitement CV (102) comprend un traitement de localisation et de cartographie simultanées (SLAM) pour aligner le contenu AR (80) sur le flux vidéo en direct (96) produit par la caméra (20, 36) du dispositif mobile (30, 90) pour produire un contenu AR aligné (104), et dans lequel le contenu AR aligné (104) inclut à partir du contenu AR (80) une annotation de numéro de pièce, un dessin de conception assistée par ordinateur (CAO) ou une partie de dessin CAO, ou une animation CAO alignée sur un emplacement d'intérêt (LOI) identifié dans le flux vidéo en direct (96) par le traitement CV (102), et dans lequel l'ordinateur serveur est configuré pour recevoir et transmettre des données via au moins une voie de communication ; et
dans lequel le dispositif mobile (30, 90) est programmé pour transmettre le flux vidéo en direct (96) produit par la caméra (20, 36) du dispositif mobile (30, 96) à l'ordinateur serveur (100) via une voie de communication entre le dispositif mobile (30, 96) et l'ordinateur serveur (100) et pour recevoir le contenu AR aligné (104) à partir de l'ordinateur serveur (100) via une voie de communication entre l'ordinateur serveur et le dispositif mobile (30, 96) et afficher sur l'écran (34, 92, 94) du dispositif mobile (30, 90) le contenu AR aligné (104) ; et
dans lequel le contenu AR aligné (104) est présenté au premier technicien de service réalisant un appel de service ultérieur qui est un appel de service réalisé ultérieurement à l'appel de service qui a été enregistré pour générer la vidéo enregistrée (40) par le second technicien de service.

2. Système de guidage de service basé sur l'AR selon la revendication 1 dans lequel, en ce qui concerne l'ordinateur serveur (100), le contenu AR aligné inclut un marqueur aligné sur un emplacement d'intérêt (LOI) identifié dans le flux vidéo en direct (96) par le traitement CV (102).

3. Système de guidage de service basé sur l'AR selon l'une quelconque des revendications 1-2 dans lequel :
le dispositif mobile (30, 90) comprend un affichage tête haute (HUD) (90) dont l'écran (92, 94) est un écran transparent et la caméra (20) est agencée pour capturer le flux vidéo en direct (96) correspondant à un point de vue d'un utilisateur du HUD regardant à travers l'écran transparent ; et
le processeur (30, 100) est programmé pour afficher sur l'écran transparent du HUD le contenu AR aligné sur le flux vidéo en direct sans afficher le flux vidéo en direct sur l'écran transparent.

4. Système de guidage de service basé sur l'AR selon l'une quelconque des revendications 1-2 dans lequel :
le dispositif mobile (30) comprend un téléphone cellulaire ou une tablette dont l'écran est un écran opaque (34) disposé sur une face avant du téléphone cellulaire ou de la tablette et la caméra est une caméra arrière (36) agencée sur une face arrière opposée du téléphone cellulaire ou de la tablette ; et
le processeur (30, 100) est programmé pour afficher sur l'écran opaque du téléphone cellulaire ou de la tablette à la fois le contenu AR aligné sur le flux vidéo en direct (96) capturé par la caméra arrière (36) et le flux vidéo en direct comme sous-couche du contenu AR.

5. Système de guidage de service basé sur l'AR selon l'une quelconque des revendications 1-4 dans lequel l'ordinateur serveur (100) est en outre programmé pour réaliser un aperçu de maintenance en réalisant le traitement CV (102) pour aligner le contenu AR (80) sur la vidéo d'aperçu (41) substituée au flux vidéo en direct (96) produit par la caméra (20, 36) du dispositif mobile (30, 90) et en affichant simultanément sur l'écran (34) du dispositif mobile à la fois le contenu AR aligné sur la vidéo d'aperçu et la vidéo d'aperçu affichée comme sous-couche du contenu AR.

6. Procédé de guidage de maintenance basé sur la réalité augmentée (AR) comprenant :
un dispositif mobile (30, 90) incluant un écran (34, 92, 94) et une caméra (20, 36) utilisés par un premier technicien de service, et dans lequel le dispositif mobile est configuré pour recevoir et transmettre des données via au moins une voie de communication ;
la réalisation par un ordinateur (52) d'un traitement CV (54) afin de générer un contenu AR (80) par des opérations incluant l'alignement (70) de composants d'un dispositif ou d'un système sur une vidéo enregistrée (40) d'un appel de service du dispositif ou du système incluant la désignation (72) d'au moins un emplacement d'intérêt (LOI) identifié dans la vidéo enregistrée de l'appel de service par une entrée utilisateur ou un second technicien de service, dans lequel l'alignement (70) comprend un traitement de localisation et de cartographie simultanées (SLAM), et dans lequel le contenu AR (80) inclut une annotation de numéro de pièce, un dessin de conception assistée par ordinateur (CAO) ou une partie de dessin CAO, ou une animation CAO alignée sur des emplacements d'intérêt (LOI), et dans lequel le second technicien de service réalise la maintenance du dispositif ou du système capturé par la vidéo enregistrée (40) à l'aide d'une caméra mobile (18), et dans lequel la vidéo enregistrée (40) est transférée de la caméra mobile (18) vers l'ordinateur (52) via au moins une voie de communication,
la transmission, par un dispositif mobile (30, 90) utilisé par un premier technicien de service, d'un flux vidéo en direct (96) produit par une caméra (20, 36) du dispositif mobile (30, 96) vers un ordinateur serveur (100) via une voie de communication entre le dispositif mobile (30, 96) et l'ordinateur serveur (100), dans lequel le dispositif mobile (30, 90) inclut un écran (34, 92, 94), et dans lequel le premier technicien de service réalise un appel de service ultérieur qui est un appel de service réalisé ultérieurement à l'appel de service qui a été enregistré pour générer la vidéo enregistrée (40) par le second technicien de service,
la réception par l'ordinateur serveur (100) du contenu AR (80) et la réalisation par l'ordinateur serveur (100) d'un traitement de vision par ordinateur (CV) (102) pour aligner le contenu AR (80) sur le flux vidéo en direct (96) capturé par la caméra (20, 36) du dispositif mobile (30, 90) utilisé par un premier technicien de service, dans lequel le traitement CV (102) comprend un traitement de localisation et cartographie simultanées (SLAM) pour aligner le contenu AR (80) sur le flux vidéo en direct (96) produit par la caméra (20, 36) du dispositif mobile (30, 90) afin de produire un contenu AR aligné (104), et dans lequel le contenu AR aligné (104) inclut, à partir du contenu AR (80), une annotation de numéro de pièce, un dessin de conception assistée par ordinateur (CAO) ou une partie de dessin CAO, ou une animation CAO alignée sur un emplacement d'intérêt (LOI) identifié dans le flux vidéo en direct (96) par le traitement CV (102) ; et
la réception, par le dispositif mobile (30, 90), du contenu AR aligné (104) de l'ordinateur serveur (100) via une voie de communication entre l'ordinateur serveur et le dispositif mobile (30, 96), et l'affichage sur l'écran (34, 92, 94) du dispositif mobile (30, 90) du contenu AR aligné (104).

7. Procédé de guidage de service basé sur l'AR selon la revendication 6 dans lequel le dispositif mobile (30, 90) comprend un affichage tête haute (HUD) (90) dont l'écran est un écran transparent (92, 94) et la caméra (20) est agencée pour capturer le flux vidéo en direct (96) correspondant à un point de vue d'un utilisateur du HUD regardant à travers l'écran transparent, et la présentation du contenu AR créé inclut :
l'affichage sur l'écran transparent du HUD du contenu AR (80) aligné sur le flux vidéo en direct sans afficher le flux vidéo en direct sur l'écran transparent.

8. Procédé de guidage de service basé sur l'AR selon l'une quelconque des revendications 6-7 dans lequel le dispositif mobile (30) comprend un téléphone cellulaire ou une tablette dont l'écran est un écran opaque (34) disposé sur une face avant du téléphone cellulaire ou de la tablette et la caméra est une caméra arrière (36) agencée sur une face arrière opposée du téléphone cellulaire ou de la tablette, et la présentation du contenu AR créé inclut :
l'affichage sur l'écran opaque du téléphone cellulaire ou de la tablette à la fois du contenu AR (80) aligné sur le flux vidéo en direct (96) capturé par la caméra arrière (36) et du flux vidéo en direct comme sous-couche du contenu AR.

9. Procédé de guidage de service basé sur l'AR selon l'une quelconque des revendications 6-8 comprenant en outre :
en utilisant l'ordinateur serveur (100) et le dispositif mobile (30, 90), la réalisation d'un aperçu de maintenance en réalisant le traitement CV (102) pour aligner le contenu AR (80) sur la vidéo d'aperçu (41) substituée au flux vidéo en direct (96) produit par la caméra (20, 36) du dispositif mobile et en affichant simultanément sur l'écran (34) du dispositif mobile à la fois le contenu AR aligné sur la vidéo d'aperçu et la vidéo d'aperçu affichée comme sous-couche du contenu AR.
